# NEW EUROPEAN PATENT SPECIFICATION

(11) **EP 0 185 629 B2**
(45) Date of publication and mention of the opposition decision: **29.09.1993**
(45) Mention of the grant of the patent: 16.08.1989
(21) Application number: 85830312.6
(22) Date of filing: 18.12.1985
(51) Int. Cl.: B23K 11/24

(54) **Resistance welding apparatus**
Widerstandsschweissvorrichtung
Appareil de soudure par résistance

(30) Priority: 21.12.1984 IT 6827684
(43) Date of publication of application: 25.06.1986
(73) Proprietor: COMAU S.p.A., 10095 Grugliasco (Torino) (IT)
(72) Inventor: Marinoni, Giorgio, I-10143 Torino (IT); Araudo, Pietro, I-10070 San Francesco Al Campo (Torino) (IT)
(74) Representative: Bosotti, Luciano

(56) References cited:
- EP-A- 0 064 570
- DE-A- 3 150 510
- DE-A- 3 344 631
- US-A- 3 636 298
- US-A- 4 496 821
- Merkblatt DVS 2918 Deutscher Verband für Schweisstechnik
- Planar (TIPL) Power Conversion Transistors, 1981, Texas Instruments
- Siemens Datenbuch, November 1980
- Kless, K. et al, Der Schweissumrichter- eine neue Stromquelle zum Widerstandspress-Schweissen, Schweissen und Schneiden, Vol 33, Heft 8, 1981
- Zeitschrift "Electronic Design", Juli 1980, Seiten 65 bis 71
- Veröffentlichung der Firma Mitsubishi, November 1984, Seiten 48 und 51

## Description

The present invention relates to electrical spot welding apparatus and is particularly concerned with welding apparatus for mounting at the end of a robot arm having the features set forth in the pre-characterising portion of Claim 1.

Welding apparatus of the type specified above, is known, for instance, from the article "Der Schweissrichter - eine neue Stromquelle zum Widerstandsprel3schweissen" by K. Kless and H. Rettenmaier which appeared in Schweissen und Schneiden 33 (1981), Heft 8. To an ever-increasing extent, such apparatus is being integrated in automated (robotised) body assembly plants, in which the welding electrodes are mounted at the free end of a robot arm. The arm is oriented by a digital control system so as to make the electrodes clamp between them those zones of the parts to be welded where the spot welds are to be made in a cyclic sequence which is to be carried out automatically.

It has been noted that the use of electrical welding apparatus of the type specified above in automated plants is hindered by several factors which may be considered as arising essentially from the dimensions of the transformer interposed between the source supplying the electrical current and the welding electrodes.

Indeed, due to the high electrical power used, the transformer has such a weight and size such as to make it practically impossible to mount it on the arm of the robot adjacent the welding electrodes. Electrical cables must be connected between the transformer and the electrodes and these have considerable cross-sections and consequently a rigidity such as to obstructthe orienting movement of t he robot arm. Such supply cables are also very expensive, deteriorate gradually in use and must be replaced periodically.

The object of the present invention is to provide electrical welding apparatus in which the disadvantages described are eliminated, and also to provide apparatus with an improved efficiency, this term meaning the ratio between the energy effectively applied to the welding electrodes and the energy absorbed by the apparatus.

According to the present invention, this object is achieved by welding apparatus of the type specified above having the further features set forth in Claim 1.

The term "periodic electrical current at intermediate frequency" is intended to mean a periodic current whose period corresponds to a frequency of the order of several hundred Hertz. For example-according to a preferred embodiment of the invention-this intermediate frequency current is constituted by a rectangular-wave (square-wave) electrical current having a frequency of the order of 400 Hertz.

The term "at intermediate frequency" has been used to clearly distinguish the frequency of the current generated by the converter circuit of the apparatus according to the invention from electrical currents used in the known types of welding apparatus, that is, alternating or periodic currents whose periodicity corresponds to the frequencies (50-60 Hertz of currents supplied by the mains.

The presence of a rectifier element on the secondary winding of the welding transformer, together with the use of a rectangular-wave (square-wave) current for the supply of the transformer itself, means that, during each welding operation, the electrodes are supplied with a current which is essentially a direct current with the exception of possible "spikes" resulting from the fact that the leading and trailing edges of the rectified rectangular wave are not perfectly vertical. Consequently, the apparatus according to the invention is considerably more efficient than known apparatus.

Furthermore, the use of a direct current (as defined) for supplying the welding electrodes has the advantage of eliminating the effects which, with alternating welding currents, are induced during the welding process upon variations in the metallic mass "embraced" by the welding electrodes. This mass actually varies according to the relative position of the electrodes and the pieces which are welded and is, for example, different according to whether the electrodes act on the edges or on central parts of the pieces.

The converter circuit is a transistorised converter circuit: the choice of this type of converter allows considerably practical advantages to be obtained, particularly with regard to the possibility of generating rectangular waves with steep leading and trailing edges and the possibility of connecting the welding transformer directly to the converter without the need to interpose passive separating networks between them.

The invention will now be described, purely by way of non-limiting example, with reference to the appended drawings, in which:
Figure 1 is a block schematic diagram of the structure of welding apparatus according to the invention,
Figure 2 is a circuit diagram illustrating the internal structure of one of the blocks of the diagram of Figure 1, and
Figure 3 comprises several superposed time graphs in which typical waveforms of the current present at various points in the apparatus of Figure 1 and the circuit diagram of Figure 2 are shown qualitatively.

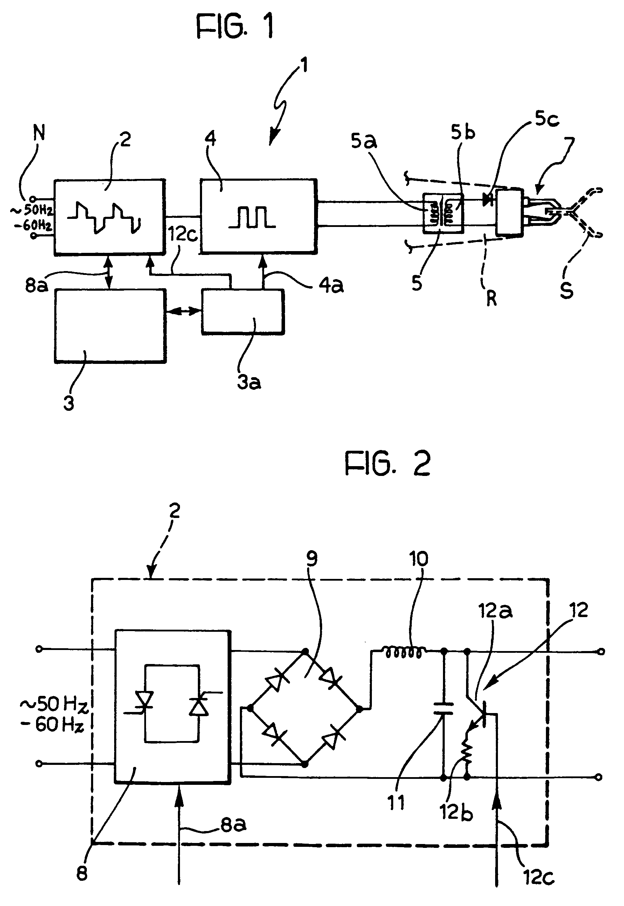

In Figure 1, electrical resistance welding apparatus for use, for example, in a plant for assembling motor vehicle bodies is generally indicated 1.

The apparatus 1 comprises essentially:
- an electrical current source 2 for connection to the mains N,
- a control circuit 3 of known type which regulates the operation of the source 2 and with which an auxiliary module, indicated 3a, is associated,
- a converter circuit 4 constituted by a transistorised static converter (inverter) supplied by the source 2 and controlled by the auxiliary module 3a,
- a transformer 5 the primary winding of which indicated 5a, is connected to the output of the converter circuit 4, and
- a pair of welding electrodes, generally indicated 7, connected to the secondary winding 5b of the transformer 5 with the interposition of a rectifier element (a diode or group of diodes 5c).

In the preferred application to an automated (robotised) welding plant, the transformer 5 is mounted adjacent the end of the robot arm which carries the welding electrodes 7.

In Figure 1, the end of this arm is schematically illustrated in broken outline and indicated R.

The electrodes 7 are arranged in a general gripper configuration which allows them to clamp metal parts to be welded in use. These parts are schematically illustrated in broken outline and indicated S in Figure 1.

In accordance with well-known criteria, the control device 3 has associated probes and sensors (not explicitly illustrated in the drawings) which enable the progress of the welding operations to be checked (monitored) continuously or almost continuously. The device 3, which acts on the supply source 2, can thus regulate the progress of the welding process in a suitable manner according to a general feeback scheme. The detailed illustration of the manner in which this monitoring operation is carried out and the internal structure of the device 3 (which may be constituted, to advantage, by the CSA 80 control device produced by the Applicants) is not essential for an understanding of the present invention and will thus be omitted from the present description. It should be noted, however, that one of the considerable advantages of the present invention is actually due to the fact that it can be put into effect by modifying welding operation of known type currently in use, without the need for radical changes in the structure and the criteria of use of the apparatus itself.

In the block schematic diagram of Figure 2, a shutter circuit, generally indicated 8, comprises, for example, two SCRs or two ignitrons connected in an anti-parallel arrangement. The operation of the circuit 8, which allows the gradual shutting-off of the sinusoidal waveform of the current taken from the mains by the variation of the so-called angle of welding, is controlled (in known manner) by triggering pulses generated by the control device 3 on a line 8a.

Downstream of the shutter circuit 8 is a rectifier bridge 9 to which is also connected an inductive-capacitive buffer network (illustrated here simply in the form of an inductor 10 and a capacitor 11) whose object is essentially that of carrying out an integrating action on the rectified current leaving the rectifying bridge circuit 9 so as to ensure constant and stable operation of the converter4 (inverter) supplied by the source 2.

As indicated above, the converter4 is an inverter constituted by four transistors driven alternatively in diagonal pairs by control pulses generated by the auxiliary module 3a on a group of lines, generally indicated 4a. This module is thus essentially a sequencer or timer which can generate control pulses in predetermined time sequences which are selectively regul- able from the outside, for example through the circuit 3. The criteria for making sequencing or shutter modules, such as the module 3a, are fully known to experts in the art and will therefore not be described in detail.

The choice of a transistorised inverterforthe converter 4 is a preferred solution over other possible choices (for example an SCR). The use of transistors in fact allows very rapid switching to be achieved, rectangular waves with steep leading and trailing edges being generated.

Furthermore, with the use of transistors, it is possible to connect the transformer 5 directly to the converter 4 without having to connect separating and protecting networks between them to avoid overloading of the converter due to any anomalies in the operation of the electrodes 7 (variations in the dimensions of the pieces S, imperfect closure of the electrodes 7 on the pieces S themselves, etc.).

Finally, a discharge circuit of the inductive-capacitive network is indicated 12 and is represented schematically in the form of a transistor 12a and a resistor 12b connected together in series so as to form a branch circuit in parallel with the capacitor 11. It is possible, however, to use electronic switches of different types (for example an SCR) instead of the transistor 12a.

The function of the circuit 12, which receives control pulses from the auxiliary module 3a through a line 12c connected to the base of the transistor 12a, is to allow the discharge to the resistor 12b of the residual energy in the resistive-capacitive network 10, 11 at the end of each elementary welding operation (the application of a spot).

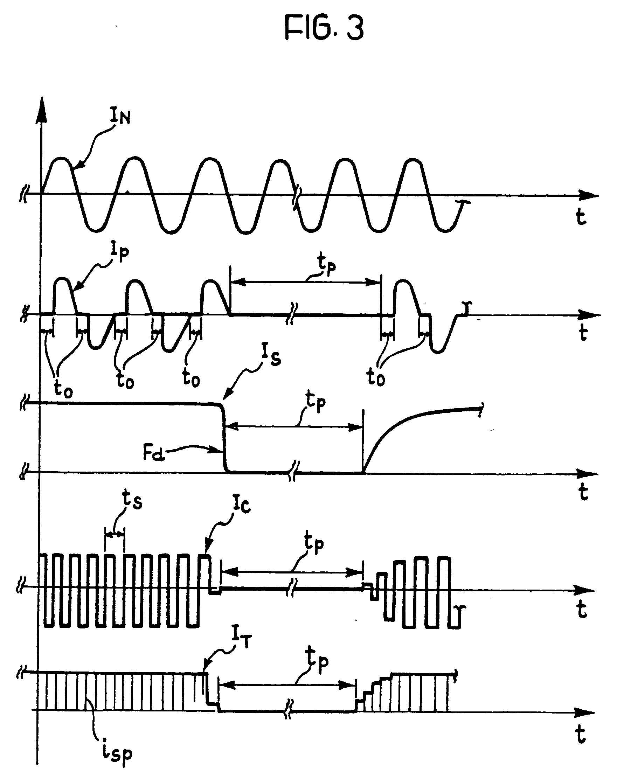

The operation of the apparatus 1 will now be described in detail with reference to Figure 3.

This Figure illustrates, in the form of superposed graphs referring to a single time scale on the abscissa, the typical time behaviour of the following currents:
- the sinusoidal current IN taken from the mains and supplied to the input of the source 2,
- the partially shut-off current lp present at the output of the shutter circuit 8 of the source 2,
- the current Is generated at the output of the source 2 and supplied to the converter 4,
- the current I_{c} generated by the converter4 and used to supply the primary winding of the transformer 5, and
- the welding current IT applied to the electrodes 7 clamped on the metal parts S to be welded by the circuit of the secondary winding 5b of the transformer 5.

In use, the apparatus is supplied with the current IN from the mains: this current therefore has a sinusoidal waveform with a frequency of 50 or 60 Hertz according to the distribution frequency adopted on a national or regional scale.

The current IN is supplied to the shutter circuit 8. The electronic control switches (SCRs or ignitrons) which are in this circuit "cut", so to speak, the sinusoidal waveform of the current IN to give rise to the current lp the time behaviour of which is shown qualitatively in the second graph of Figure 3. The current I_{P} thus has a waveform in which there can be distinguished sinusoidal portions separated by time intervals, indicated to, in which the current I_{P} is zero.

The duration of the intervals to relative to the period of the current I_{P} is controlled selectively (in known manner) by the control device 3 which thus sets the so-called welding angle. More particularly, the device 3, by means of the partial shutting action effected by the circuit 8, regulates the effective (rms) value of the current which is sent (after further treatments) to the welding electrodes 7. The regulation of this rms value in dependence on the thickness and nature of the metal parts S to be welded, the wear of the electrodes, etc., is essential to ensure a good result from the welding operation.

The control device 3 itself then controls periodically the interruption of the supply of the current I_{P} (lp=O) for time intervals indicated tp. Typically, one is dealing with the time intervals needed to move the welding electrodes 7 from one region of the parts or pieces S where a welding operation (the application of a spot) has been carried out to another region of the same pieces, or to other pieces to be welded.

Both the current IN taken from the mains and the partially shut-off current I_{P} have a periodicity with a period corresponding to a low frequency, that is, a frequency of the order of several tens of Hertz (typically 50-60 Hertz).

In the bridge circuit 9, the current I_{P} is rectified and subsequently supplied to the inductive-capacitive (reactive) network 10, 11 which effects an integrating (stabilising) operation on the current.

The output from the source 2 is thus the current Is which may be defined essentially as a direct current.

More precisely, as illustrated qualitatively in the third graph of Figure 3, during the time intervals tp in which the source 2 is deactivated, the current Is is also zero. As soon as an exemplary welding operation (the application of a spot) is started the device 3 activates the source 2 and the current Is increases approximately exponentially (with a time constant determined by the values of the inductive and capacitive components 10, 11) until it reaches a constant or continuous value (the behaviour of the current Is is illustrated to the right of the interval tp in the third graph of Figure 3).

This constant or continuous value is maintained until the device 3 deactivates the source 2 upon completion of the elementary welding operation (the application of a spot).

Upon deactivation of the source 2, the auxiliary module 3a activates (makes conductive) the transistor 12a so that the residual charge present in the inductive-capacitive network 10, 11 is discharged rapidly to the resistance 12b, giving rise to a very steep trailing edge in the current Is, indicated F_{d} in the third graph of Figure 3.

In addition to the functions described previously, the device and the auxiliary module 3a associated therewith also have a controlling action on the other operating characteristics of the apparatus 1, in particular, limiting the voltage present in the rectifying bridge circuit 9 to a maximum admissible value, stopping the apparatus when breakdown or overloading of the apparatus occurs, etc.

From the continuous current Is supplied to its input, the transistorised converter4 generates an alternating current I_{c} which is applied to the primary winding of the transformer 5. The current I_{c} typically has a rectangular waveform whose period, indicated tₛ in the fourth graph of Figure 3, is of the order of 2.5 ms, corresponding to a frequency of 400 Hertz.

One is thus considering, according to the terminology adopted in the following claims, a current "at intermediate frequency", so called to distinguish it from the "low frequency" currents IN, lp present in the supply source 2.

The supply with an intermediate frequency current-other things being equal-allows the dimensions and weight of the transformer 5 to be reduced relative to the dimensions and weight of welding transformers of known type which operate with low-frequency currents.

In addition to this, the use of a rectangular waveform (square-wave) further improves the performance of the transformer 5, increasing its efficiency and reducing its heat dissipation.

The transformer 5, which is connected directly to the converter 4, that is without the interposition of separating networks, transforms the magnitude of the current which is supplied thereto and brings it to the values of 5-20 kA required by the electrodes 7 for carrying out the welding operations.

Due to the presence of the rectifier element 5c, the current in the circuit of the secondary winding of the transformer is a rectified current I_{T}with a behaviour of the type shown schematically in the last graph of Figure 3.

One is dealing with a current which is more or less constant during each of the elementary welding cycles separated by the periods of deactivation tp. More precisely, as is normally the case for currents obtained by rectifying rectangular waveforms, the behaviour of the current IT is defined by a continuous line of constant level (with the exception, of course, of the leading edge which is shown at the beginning of each elementary welding operation) with "spikes"- one of which is indicated schematically by iₛp-whose presence is due to the fact that the leading and trailing edges in the rectangular waveform of the current I_{c} are not perfectly vertical.

The influence of these spikes on the operation of the electrodes 7, however, is negligible; during each elementary welding operation (the application of a spot), the electrodes 7 are thus supplied with a substantially direct current which allows the achievement of considerable overall efficiency in the welding operation, with a considerable improvement in the energy efficiency of the apparatus, and the elimination of perturbations which may be induced by variations in the metallic mass of the parts gripped between the electrodes 7.

As a basic consideration, it should be noted that the scales of the ordinates in the various graphs of Figure 3 are not proportionate to each other. Each graph is in fact represented in a scale such as to allow a sufficiently clear representation of its more significant parameters.

Naturally, the principle of the invention remaining the same, the constructional details and forms of embodiment may be varied widely with respect to that described and illustrated, without thereby departing from the scope of the present invention as defined by the claims.

## Claims

1. Electrical spot welding apparatus for mounting at the end of a robot arm comprising:
- a pair of welding electrodes (7) which, in use, cooperate with each other with the interposition of the parts (S) to be welded,
- an electrical current source (2) for connection to the mains and operating at a frequency substantially corresponding to the frequency of the mains current,
- an electrical transformer (5) mounted immediately adjacent the welding electrodes (7), having a primary winding (5a) supplied by the electrical current source (2) an a secondary winding (5b) which supplies the welding electrodes (7),
- a converter circuit (4) connected between the electrical current source (2) and the transformer (5), which from the electrical power supplied by the source (2), generates a periodic electrical current (Iₑ) at intermediate frequency (as defined previously), which is supplied to the primary winding (5a) of the transformer (5), and
- a rectifier element (5c) associated with the secondary winding (5b), whereby the electrodes (7) are supplied with a rectified, substantially direct current (l_{c})
characterised in that the converter circuit (4) is a transistorised converter circuit which generates a rectangular-wave electrical current (Ic), and in that the transformer (5) is connected directly to the converter circuit (4)".

2. Apparatus according to Claim 1, characterised in that the converter circuit (4) generates a periodic electrical current (l_{c}) having a frequency of repetition of the order of 400 Hertz.

3. Apparatus according to any one of Claims 1 or 2 characterised in that the converter circuit (4) is supplied by the electrical current source through a rectifier circuit (9) whereby the converter circuit (4) is supplied with a rectified current (Is).

4. Apparatus according to Claim 3, characterised in that with the rectifier circuit (9) there is associated a reactive electrical network (10,11) which has a stabilising action on the energy associated with the current supplied by the converter circuit (4).

5. Apparatus according to Claim 4, in which the electrical source (2) supplies electrical welding currents in separate activation cycles (tp), characterised in that the reactive network (10, 11) has at least one associated switching element (12a) which is selectively operable so as to discharge residual energy from the reactive network (10, 11) at the end of each activation cycle.

6. Apparatus according to Claim 5, characterised in that the switching element (12a) is a transistor.

## Patentansprüche

1. Elektrische Punktschweißvorrichtung zur Montage am Ende eines Roboterarms, enthaltend:
ein Paar Schweißelektroden (7), die im Gebrauch miteinander u nter Zwischenlage der zu schweißenden Teile (S) zusammenwirken,
eine elektrische Stromquelle (2) zum Anschluß an das Netz und zum Betrieb mit einer Frequenz, die im wesentlichen der Frequenz des Netzstroms entspricht,
einen elektrischen Transformator (5), der unmittelbar benachbart den Schweißelektroden (7) montiert ist und der eine Primärwicklung (5a) hat, die von der elektrischen Stromquelle (2) versorgt wird, und eine Sekundärwicklung (5b) hat, die die Schweißelektroden (7) versorgt,
eine Wandlerschaltung (4), die zwischen die elektrische Stromquelle (2) und den Transformator (5) geschaltet ist, die, von der von der Quelle (2) gelieferten elektrischen Energie versorgt, einen periodischen elektrischen Strom (l_{c}) mit Zwischenfrequenz (wie zuvor definiert) erzeugt, der der Primärwicklung (5a) des Transformators (5) zugeführt wird, und ein Gleichrichterelement (5c), das der Sekundärwicklung (5b) zugeordnet ist, wodurch die Elektroden (7) mit einem gleichgerichteten, im wesentlichen Gleichstrom (l_{c}) versorgt werden, dadurch gekennzeichnet, daß die Wandlerschaltung eine transistorisierte Wandlerschaltung (4) ist die einen elektrischen Rechteckwellenstrom (I_{c}) erzeugt, und daß der Transformator (5) direkt mit der Wandlerschaltung (4) verbunden ist.

2. Vorrichtung nach dem Anspruch 1 dadurch gekennzeichnet, daß die Wandlerschaltung (4) einen periodischen elektrischen Strom (I_{c}) erzeugt, der eine Wiederholungsfrequenz in der Größenordnung von 400 Hz hat.

3. Vorrichtung nach einem der Ansprüche 1 oder 2, dadurch gekennzeichnet, daß die Wandlerschaltung (4) von der elektrischen Stromquelle über eine Gleichrichterschaltung (9) versorgt wird, wodurch die Wandlerschaltung (4) mit einem gleichgerichteten Strom (Iₛ) versorgt wird.

4. Vorrichtung nach Anspruch 3, dadurch gekennzeichnet, daß der Gleichrichterschaltung (9) ein elektrisches Reaktanznetzwerk (10, 11) zugeordnet ist, das eine stabilisierende Wirkung auf die Energie hat, die mit dem der Wandlerschaltung (4) zugeführten Strom einhergeht.

5. Vorrichtung nach Anspruch 4, bei der die elektrische Quelle (2) elektrische Schweißströme in getrennten Aktivierungszyklen (tp) liefert, dadurch gekennzeichnet, daß Reaktanznetzwerk (10,11) wenigstens ein zugeordnetes Schalterelement (12a) aufweist, das wahlweise derart betreibbar ist, daß Restenergie von dem Reaktanznetzwerk (10, 11) am Ende eines jeden Aktivierungszyklus entladen wird.

6. Vorrichtung nach Anspruch 5, dadurch gekennzeichnet, daß das Schalterelement (12a) ein Transistor ist.

## Revendications

1. Appareil de soudure électrique par point pour fixation à l'extrémité d'un bras de robot, comprenant:
- une paire d'électrodes de soudure (7) qui, en fonctionnement, travaillent solidairement avec interposition des pièces (S) à souder,
- une source de courant électrique (2) pour le branchement au secteur et fonctionnant à une fréquence correspondant essentiellement à la fréquence du secteur,
- un transformateur électrique (5) monté à proximité immédiate des électrodes de soudure (7) comportant un enroulement primaire (5a) alimenté par la source de courant électrique (2) et un enroulement secondaire (5b) qui alimente les électrodes de soudure (7),
- un circuit convertisseur (4) branché entre la source de courant électrique (2) et le transformateur (5) qui à partir de la puissance électrique fournie par la source (2), engendre un courant électrique périodique (I_{c}) à fréquence intermédiaire (telle que préalablement définie) qui est envoyé à l'enroulement primaire (5a) du transformateur (5), et
- un élément redresseur (5c) associé à l'enroulement secondaire (5b), fournissant ainsi aux électrodes (7) un courant (I_{c}) redressé, pratiquement continu caractérisé en ce que le circuit convertisseur est un circuit convertisseur transistorisé (4) qui engendre un courant électrique à onde rectangulaire (I_{c}), et en ce que le transformateur (5) est branché directement au circuit convertisseur (4).

2. Appareil selon la revendication 1 caractérisé en ce que le circuit convertisseur (4) engendre un courant électrique périodique (I_{c}) ayant une fréquence de répétition de l'ordre de 400 Hertz.

3. Appareil selon l'une quelconque des revendications 1 ou 2, caractérisé en ce que le circuit convertisseur (4) est alimenté par la source de courant électrique à travers un circuit redresseur (9), le circuit convertisseur (4) recevant ainsi un courant redressé (Iₛ).

4. Appareil selon la revendication 3, caractérisé en ce qu'au circuit redresseur (9) est associé un réseau électrique réactif (10-11) qui exerce une action stabilisante sur l'énergie associée au courant fourni par le circuit convertisseur (4).

5. Appareil selon la revendication 4, dans lequel la source électrique (2) fournit des courants de soudure électrique en cycles séparés d'activation (tp), caractérisé en ce que le réseau réactif (10-11) est associé au moins à un élément de commutation (12a) qui est recommandable de façon sélective afin de décharger le réseau actif (10-11) de l'énergie résiduelle à la fin de chaque cycle d'activation.

6. Appareil selon la revendication 5, caractérisé en ce que l'élément de commutation (12a) est un transistor.
